# EUROPEAN PATENT SPECIFICATION

(11) **EP 3 835 158 B1**
(45) Date of publication and mention of the grant of the patent: **12.04.2023**
(21) Application number: 19859310.5
(22) Date of filing: 09.08.2019
(51) Int. Cl.: B60W 20/40, B60K 6/48, B60L 50/16, B60W 10/02, B60W 10/06, B60W 10/08, F02N 11/00, B60W 20/11, B60W 30/182, B60K 6/387

(54) **ENGINE START CONTROLLER FOR HYBRID VEHICLE, AND HYBRID VEHICLE**
MOTORSTARTSTEUERUNGSVORRICHTUNG FÜR HYBRIDFAHRZEUG SOWIE HYBRIDFAHRZEUG
DISPOSITIF DE COMMANDE DE DÉMARRAGE DE MOTEUR POUR VÉHICULE HYBRIDE, ET VÉHICULE HYBRIDE

(30) Priority: 13.09.2018 JP 2018171523
(43) Date of publication of application: 16.06.2021
(73) Proprietor: MAZDA MOTOR CORPORATION, Hiroshima 730-8670 (JP)
(72) Inventor: SAITO Tadashi, Aki-gun, Hiroshima 730-8670 (JP); FUKUDA Yutaro, Aki-gun, Hiroshima 730-8670 (JP)
(74) Representative: Müller-Boré & Partner Patentanwälte PartG mbB
(86) International application number: PCT/JP2019/031639
(87) International publication number: WO 2020/054295

(56) References cited:
- EP-A1- 1 839 986
- DE-A1-102007 062 796
- JP-A- 2008 024 287
- JP-A- 2011 230 521
- JP-A- 2013 144 534
- JP-A- 2015 077 847
- US-A1- 2011 040 433
- US-A1- 2017 259 808

## Description

### Technical Field

The present invention relates to an engine start controller for a hybrid vehicle and to a hybrid vehicle.

### Background Art

Control for starting an engine by using a motor in a hybrid vehicle that includes, as drive sources, the engine and the motor and that is driven by at least one of engine output and motor output has been proposed. For example, in PTL 1, it is disclosed that engine start torque, which is output from the motor at the time of starting the engine during driving of the vehicle by using the motor (during motor travel), is calculated on the basis of a rotation stop position of a crankshaft in the engine immediately before an initiation of the engine start (a stop crankshaft position of the engine) and that, during the motor travel, a motor travel range is set such that the motor is actuated in a state of saving redundant power for generating the engine start torque.

US 2011/040333 A1 describes a method and a device for determining, ascertaining, and predicting at least one starting torque or starting torque characteristic curve required for starting an internal combustion engine for a vehicle, especially a hybrid vehicle having at least one internal combustion engine and at least one additional motor. The determination and the ascertainment of the starting torque or the starting torque characteristic curve are carried out during the operation of the vehicle. A method for operating at least one motor in a hybrid vehicle is also described.

DE 10 2007 062796 A1 describes a method for operating a hybrid drive device, in particular for a motor vehicle, which has at least one internal combustion engine and at least one electric machine, wherein the internal combustion engine and the electric machine may be operatively connected to one another mechanically by means of a disconnect clutch. The slip torque is determined as a function of the rotational speed characteristic of an output shaft of the internal combustion engine at least during starting and/or stopping of the internal combustion engine and is taken into account during operation of the hybrid drive device.

EP 1 839 986 A1 describes a driving mode transition controller for a hybrid vehicle equipped with engine, motor-generator, and clutch installed between the engine and the motor-generator, wherein the engine is started by engaging the clutch and using the motor-generator as a starter motor for the engine when making a mode transition from an "EV mode" which utilizes only motor-generator as the power source to an "HEV mode" which includes the engine as part of the power source.

### Citation List

### Patent Literature

PTL 1: JP-A-2012-86662

### Summary of Invention

### Technical Problem

By the way, it is considered that transmission torque from the motor to the engine fluctuates by a factor other than the engine stop crank position. Thus, the factor other than the engine stop crank position has to be considered to reliably start the engine. However, in the case where the engine start torque of the motor is set in a manner to reliably start the engine, an amount of the engine start torque that has to be saved as the redundant power by the motor during the motor travel is increased, which in turn narrows the motor travel range (an EV travel range) where the vehicle can travel only using the motor.

The present invention has been made in view of such a point and therefore has a purpose of providing an engine start controller for a hybrid vehicle, and a hybrid vehicle capable of expanding an EV travel range and improving fuel economy by reducing engine start torque as low as possible, and the engine start torque of a motor having to be saved as redundant power during driving of the hybrid vehicle by using the motor.

### Solution to Problem

In order to achieve the above purpose, an engine start controller for a hybrid vehicle, and a hybrid vehicle are provided. The underlying problem is solved by an engine start controller for a hybrid vehicle, and a hybrid vehicle, having the features of claims 1 and 4. Additional embodiments are defined in the dependent claims.

In regard to the engine start controller for the hybrid vehicle, the hybrid vehicle has, as drive sources of the hybrid vehicle, an engine and a motor that are mutually coupled via a clutch. The engine start controller includes: a clutch transmission torque control section that controls transmission torque of the clutch on the basis of a target engine speed value at the time of starting the engine using the motor via the clutch; and a target engine speed value setting section that sets the target engine speed value on the basis of a stop crank position of the engine.

With the above configuration, when the engine is started, the target engine speed value setting section sets the target engine speed value on the basis of the stop crank position of the engine, and the clutch transmission torque control section controls the clutch such that the required transmission torque for starting of the engine is generated at a speed of the target engine speed value. In this way, it is possible to optimize the required transmission torque of the clutch to start the engine. An engine start time can also be optimized.

The engine start controller for the hybrid vehicle further preferably includes: a correction section that corrects the target engine speed value set by the target engine speed value setting section on the basis of mechanical resistance of the engine.

In this way, the correction section, which corrects the target engine speed value, can appropriately corrects the target engine speed value on the basis of the mechanical resistance of the engine.

The engine start controller for the hybrid vehicle further includes: a feedback correction section that subjects the transmission torque of the clutch controlled by the clutch transmission torque control section to feedback correction on the basis of the target engine speed value, which is set by the target engine speed value setting section, and a measured value of an engine speed.

In this way, the feedback correction section can convert the difference between the target engine speed value and the measured value of the engine speed into the transmission torque of the clutch (a feedback correction amount). Thus, it is possible to appropriately subject the transmission torque, which is controlled by the clutch transmission torque control section, to the feedback correction.

In the engine start controller for the hybrid vehicle, the target engine speed value setting section is preferably configured to set the target engine speed value such that an engine start time, which is based on the target engine speed value, becomes short at the time of starting the engine by increasing requested drive power by a driver of the hybrid vehicle and becomes long at the time of starting the engine by another cause.

In this way, in the case where the engine is started by increasing requested drive power (an acceleration request) by a driver of the hybrid vehicle, the engine can be started with an emphasis on responsiveness, that is, can be started promptly. In the case where the engine is started by the other cause, it takes a long time. However, the engine can be started while a shock is suppressed, that is, with low energy.

An example of the other cause is that a state of charge (SOC) of a battery for driving the motor becomes equal to or lower than a specified value.

A hybrid vehicle according to another aspect of the present invention includes: an engine and a motor that serve as drive sources of the hybrid vehicle and are mutually coupled via a clutch; and an engine start controller as defined above.

With this configuration, it is possible to obtain similar effects to the engine start controller for the hybrid vehicle. Advantageous Effects of Invention

As it has been described so far, according to the engine start controller for the hybrid vehicle and the hybrid vehicle according to the present invention, it is possible to reduce the engine start torque of the motor, which has to be saved as redundant power during driving of the hybrid vehicle by using the motor, as low as possible, which in turn expands an EV travel range. Therefore, fuel economy can be improved.

### Brief Description of Drawings

[Fig. 1] Fig. 1 is schematic view partially illustrating a mechanical system, an electric system, and a hydraulic system of a hybrid vehicle that includes an engine start controller according to an exemplary embodiment.
[Fig. 2] Fig. 2 is a block diagram illustrating electrical connection between components of an electronic control unit and components connected to the electronic control unit.
[Fig. 3] Fig. 3 is a graph illustrating a temporal change in clutch transmission torque that is transmitted from a motor to an engine via a clutch.
[Fig. 4] Fig. 4 is a graph illustrating a relationship between an engine stop crank position (crank angle) and loss torque.
[Fig. 5] Fig. 5 is a graph illustrating a temporal change in an engine speed (target value).
[Fig. 6] Fig. 6 is a graph illustrating a temporal change in the engine speed (measured value).
[Fig. 7] Fig. 7 is a graph illustrating the temporal changes in the engine speed (target value and measured value).
[Fig. 8] Fig. 8 is a graph illustrating a feedback correction amount of the clutch transmission torque that is calculated on the basis of a difference between the target value and the measured value of the engine speed.
[Fig. 9] Fig. 9 is a chart for illustrating a control flow using Fig. 3 to Fig. 8.
[Fig. 10] Fig. 10 is a graph illustrating the temporal changes in the engine speed (target value, measured value, and measured value after feedback correction).
[Fig. 11] Fig. 11 is a graph illustrating a change in the clutch transmission torque and illustrating the feedback correction of the clutch transmission torque.
[Fig. 12] Fig. 12 is a graph illustrating fluctuation in the clutch transmission torque and a start time in engine start control using the target value and engine start control not using the target value.
[Fig. 13] Fig. 13 is a flowchart of the engine start control by the electronic control unit.

### Description of Embodiments

A detailed description will hereinafter be made on an exemplary embodiment with reference to the drawings.

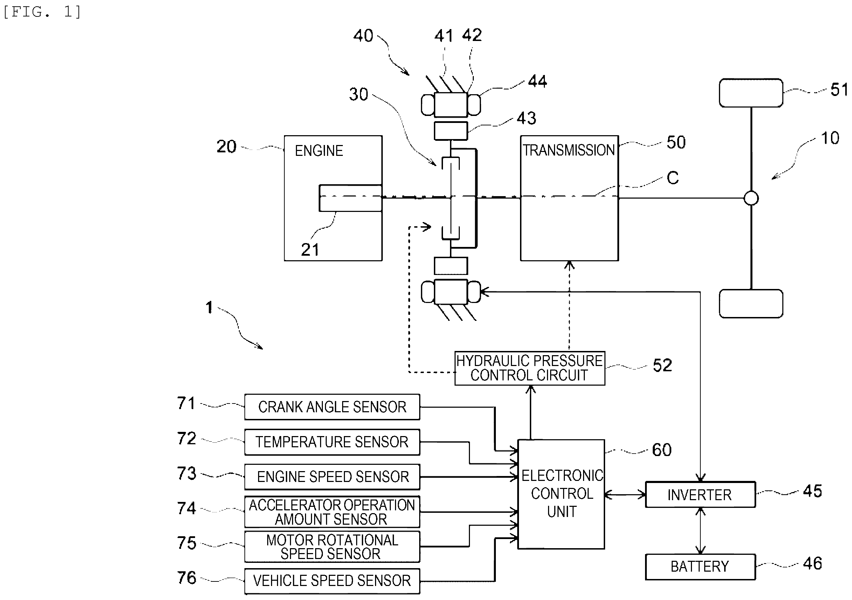

Fig. 1 schematically and partially illustrates a mechanical system, an electric system, and a hydraulic system of a hybrid vehicle 10 (hereinafter referred to as a vehicle 10) that includes an engine start controller 1 according to the exemplary embodiment.

As illustrated in Fig. 1, the vehicle 10 includes an engine 20, a clutch 30, a motor 40, and a transmission 50. The transmission 50 can be coupled to wheels 51 (front wheels, rear wheels, or both of these) of the vehicle 10. The engine 20 (particularly, a crankshaft 21 thereof), the clutch 30, the motor 40, and the transmission 50 include a common shaft C that extends in a longitudinal direction of the vehicle 10. It is configured that necessary components rotate about this shaft C. The engine 20 and the motor 40 are drive sources of the vehicle 10.

The engine 20 and the transmission 50 are connected via the clutch 30 and the motor 40. In a state where the clutch 30 is engaged, output (rotational torque) of the engine 20 is transmitted to the transmission 50 via the clutch 30 and the motor 40. The motor 40 is directly coupled to the transmission 50, and output (rotational torque) of the motor 40 is transmitted to the transmission 50. Thus, the vehicle 10 can travel by selecting one of three travel modes. The three travel modes are (a) an engine travel mode in which the output of the engine 20 is transmitted to the transmission 50 via the clutch 30 in a state where the clutch 30 is engaged and the motor 40 is stopped, (b) a hybrid travel mode in which the output of the engine 20 is transmitted to the transmission 50 via the clutch 30 and rotation of the motor 40 is transmitted to the transmission 50 in a state where the clutch 30 is engaged and the motor 40 is driven, and (c) a motor travel mode (EV travel mode) in which the rotation of the motor 40 is transmitted to the transmission 50 in a state where the clutch 30 is disengaged and the motor 40 is driven.

The engine 20 may be a gasoline engine or a diesel engine, for example. The engine 20 includes the crankshaft 21 as an output section. The engine 20 can be started when the output of the motor 40 is transmitted to the crankshaft 21 via the clutch 30 in the state where the clutch 30 is engaged. Transmission torque that is transmitted from the motor 40 to the engine 20 via the clutch 30 can be regulated by a hydraulic pressure control circuit 52. The control by the hydraulic pressure control circuit 52 will be described below.

The motor 40 includes, for example: a ring-shaped stator 42 that is fixed to a motor housing 41; and a rotor 43 configured to be arranged on a radially inner side of the stator 42 and be rotatable about the shaft C. The stator 42 is configured by winding a coil 44 around a stator core. The coil 44 is connected to a battery 46 via an inverter 45. Accordingly, when a DC current that is supplied from the battery 46 is converted into an AC current by the inverter 45, and the AC current is then applied to the coil 44, the rotor 43 rotates, and the motor 40 thereby generates the torque.

The engine 20 includes a crank angle sensor 71, and, optionally, a temperature sensor 72 and an engine speed sensor 73. The crank angle sensor 71 is a sensor that detects and outputs a crank angle of the crankshaft 21 in the engine 20 (a rotation angle of the crankshaft 21 that is expressed by degree unit with top dead center of a piston in a cylinder being a reference). The temperature sensor 72 is a sensor that measures and outputs a temperature of a coolant that flows through inside of the engine 20, for example. The engine speed sensor 73 is a sensor that detects and outputs a speed of the engine 20 (also referred to as an engine speed).

As illustrated in Fig. 1, the vehicle 10 includes the engine start controller 1 that controls a start of the engine 20. The engine start controller 1 includes an electronic control unit 60, and this electronic control unit 60 receives signals from the various sensors. Examples of these input signals are signals from an accelerator operation amount sensor 74, a motor rotational speed sensor 75, a vehicle speed sensor 76, and the like in addition to signals from the crank angle sensor 71, the temperature sensor 72, and the engine speed sensor 73 described above.

The accelerator operation amount sensor 74 is a sensor that detects and outputs requested drive power (an accelerator operation amount) by a driver of the vehicle 10, is provided in an operation device used by the driver of the vehicle 10 to drive the vehicle 10, for example, and detects and outputs an operation amount of the operation device. The motor rotational speed sensor 75 is a sensor that detects and outputs a rotational speed of the motor 40, and can be provided to the motor 40, for example. The vehicle speed sensor 76 is a sensor that detects and outputs a speed of the vehicle 10, is provided to the transmission 50, for example, detects a rotational speed of the transmission 50, and outputs the signal corresponding to the rotational speed of the transmission 50. The electronic control unit 60 is also connected to the inverter 45 and the battery 46 and can acquire information on a charged rate or a state of charge (SOC) of the battery 46.

The electronic control unit 60 is a controller that is based on a well-known microcomputer and includes: a central processing unit (CPU) that executes computer programs (including a basic control program such as an OS and an application program that is run on the OS to implement a particular function); memory including RAM and ROM, for example; and an input/output (I/O) bus that inputs/outputs an electric signal.

The ROM stores the various computer programs, data including various maps, and the like. The RAM is provided with a processing area that is used when the CPU executes a series of processing.

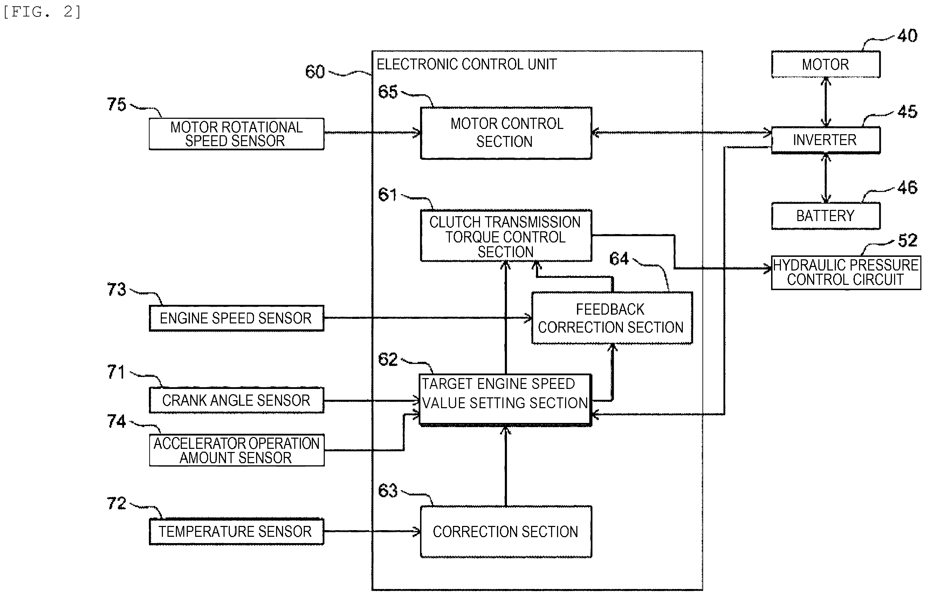

As illustrated in Fig. 2, the electronic control unit 60 is provided with a clutch transmission torque control section 61. The clutch transmission torque control section 61 is connected to the hydraulic pressure control circuit 52 and controls the clutch 30 through the hydraulic pressure control circuit 52. The electronic control unit 60 controls the transmission 50 through the hydraulic pressure control circuit 52 by a transmission control section, which is not illustrated.

The electronic control unit 60 is provided with a motor control section 65 that controls driving of the motor 40. The motor control section 65 is connected to the inverter 45, and controls driving of the motor 40 through the inverter 45 on the basis of the signal from the motor rotational speed sensor 75.

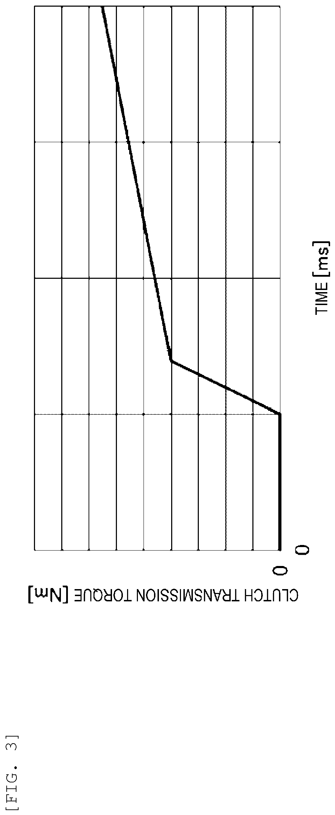

Fig. 3 illustrates a temporal change in the transmission torque of the clutch 30 (hereinafter referred to as clutch transmission torque or the transmission torque), and the transmission torque is transmitted from the motor 40 to the engine 20 at the time of starting the engine 20. As illustrated in Fig. 3, the clutch transmission torque is rapidly increased at an initial stage of the start. Then, at specified time onward, an increasing rate of the clutch transmission torque is reduced, and the clutch transmission torque is gradually increased. This is to facilitate execution of feedback correction, which will be described below, by detecting a measured value of the engine speed (an actual engine speed) at the specified time onward.

It has experimentally been known that, when the engine 20 is started, required torque to start the engine 20, that is, required torque for rotation of the crankshaft 21 (here, torque corresponding to compression resistance by the piston, that is, loss torque) is changed by a stop angle of the crankshaft 21 (a stop crank position of the engine 20). Accordingly, in order to start the engine 20 efficiently, it is desired to detect the stop crank position (the crank angle) of the engine and regulate the clutch transmission torque according to the detected stop crank position.

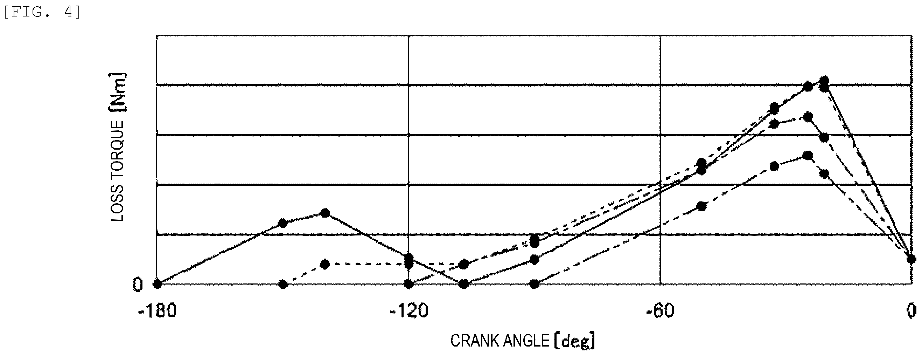

Fig. 4 is a graph illustrating a relationship between this stop crank position and the loss torque. A vertical axis of this graph represents the loss torque [Nm], and a horizontal axis represents the crank angle [deg]. Each of line graphs illustrates how the loss torque is changed (a trajectory of the resistance) according to advancement of the crank angle (that is, according to rotation of the engine 20) from four particular stop crank positions (-180 degrees, -150 degrees, -120 degrees, and -90 degrees). For example, on the graph drawn by a solid line, the stop crank position is -180 degrees, and the change in the loss torque according to the advancement of the crank angle therefrom is illustrated. On the graph drawn by a two-dot chain line, the stop crank position is -90 degrees, and the change in the loss torque according to the advancement of the crank angle therefrom is illustrated. As it is apparent from Fig. 4, the transmission torque (the loss torque) that is required for the rotation thereafter differs by the stop crank position. Thus, it is understood that an optimum value of the transmission torque that is transmitted from the motor 40 via the clutch 30 differs by the stop crank position.

At the start of the engine 20 by the motor 40, the clutch transmission torque control section 61 controls the clutch transmission torque on the basis of a target engine speed value. The target engine speed value is set by a target engine speed value setting section 62, which is illustrated in Fig. 2. The target engine speed value setting section 62 is provided in the electronic control unit 60 and receives the signal from the crank angle sensor 71. Based on the stop crank position in the received signal from the crank angle sensor 71, the target engine speed value setting section 62 sets the target engine speed value (that is, a target value of the engine speed by the motor 40). Then, based on the target engine speed value, the clutch transmission torque control section 61 optimizes the transmission torque to be transmitted via the clutch 30. In this way, a start time of the engine 20 is also optimized.

Here, the torque that is required to start the engine 20 can also be changed by mechanical resistance of the engine 20. Accordingly, in this embodiment, as illustrated in Fig. 2, the electronic control unit 60 includes a correction section 63 for correcting the target engine speed value, which is set by the target engine speed value setting section 62, on the basis of the mechanical resistance of the engine 20. The mechanical resistance of the engine 20 is changed by a change in friction by the engine speed, a change in sliding resistance by a cylinder temperature, and the like. Thus, correction that is based on the mechanical resistance of the engine 20 can be set in advance in consideration of these factors (the change in the friction by the engine speed, the change in the sliding resistance by the cylinder temperature, and the like). The correction section 63 corrects the target engine speed value on the basis of the signal (temperature information) from the temperature sensor 72, for example. Instead thereof or in addition thereto, the correction section 63 can correct the target engine speed value on the basis of the signal from the engine speed sensor 73 and/or the motor rotational speed sensor 75. The correction section 63 sends a correction amount of the target engine speed value to the target engine speed value setting section 62.

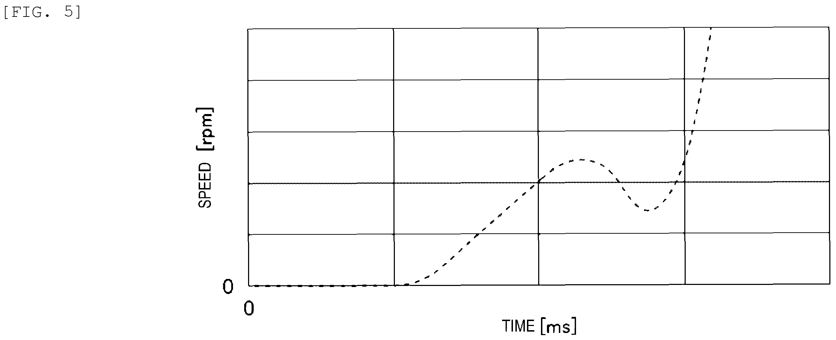

When the engine 20 is started by the torque transmission from the motor 40 via the clutch 30, the target engine speed value setting section 62 sets the optimum target engine speed value on the basis of the stop crank position (that is, the loss torque), the correction amount by the correction section 63, and inertia (moment of inertia) of the engine 20 that is acquired by measurement in advance, a set value, or the like. A vertical axis in a graph of Fig. 5 represents the engine speed [rpm], a horizontal axis therein represents time [ms], and a broken line in the graph illustrates an example of a change in the optimum target engine speed value after initiation of start control for the engine 20.

Next, the clutch transmission torque control section 61 calculates the required transmission torque (the transmission torque from the motor 40 to the engine 20 via the clutch 30) to cause the rotation of the engine 20 at the speed in the optimum target engine speed value (hereinafter also referred to as a target value), and controls the clutch 30 (the hydraulic pressure control circuit 52) such that the calculated transmission torque is generated. At this time, a feedback correction section 64 (see Fig. 2) that is provided in the electronic control unit 60 measures the actual engine speed (hereinafter also referred to as a measured value) from the signal received from the engine speed sensor 73, converts a difference between these target value and measured value into the transmission torque (a feedback correction amount), and performs the feedback correction of the clutch transmission torque, which is controlled by the clutch transmission torque control section 61, on the basis of this converted transmission torque. Hereinafter, such processing of the prediction and the measurement is repeated to optimize the transmission torque for starting the engine 20.

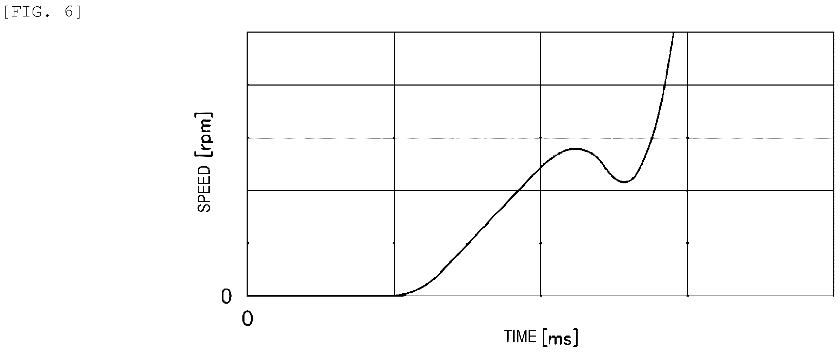

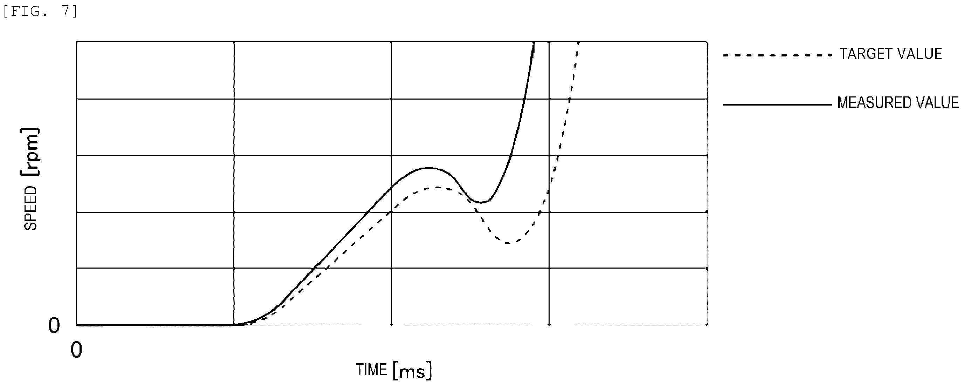

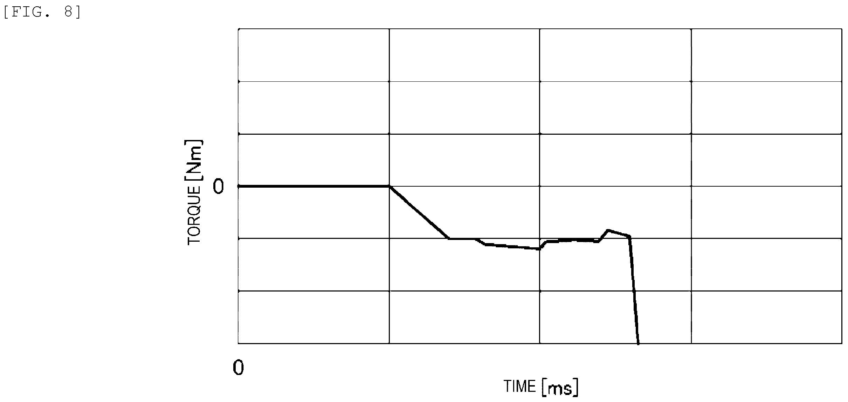

Fig. 6 illustrates an example of the change in the actual engine speed, which is controlled on the basis of the target value in Fig. 5, by a solid line. In Fig. 7, the target value in Fig. 5 and the measured value in Fig. 6 are drawn on the same graph, and a difference therebetween in a vertical axis direction corresponds to the difference between the measured value and the target value of the engine speed. Fig. 8 illustrates the feedback correction amount (described as "TORQUE" in Fig. 8) of the clutch transmission torque that is calculated on the basis of this difference. A vertical axis in Fig. 8 represents a torque value [Nm], a horizontal axis therein represents the time [ms], and this torque value is subjected to the feedback so as to correct (performs the feedback correction of) the clutch transmission torque. Fig. 8 illustrates an example of the feedback correction amount (a negative value) for reducing the clutch transmission torque in the case where the measured value of the engine speed is higher than the target value thereof, for example, as illustrated in Fig. 7.

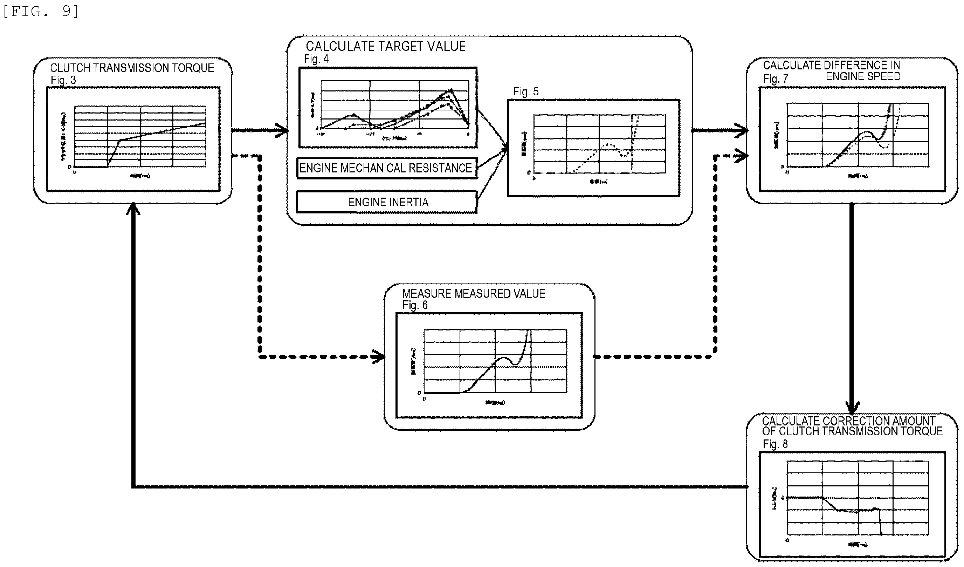

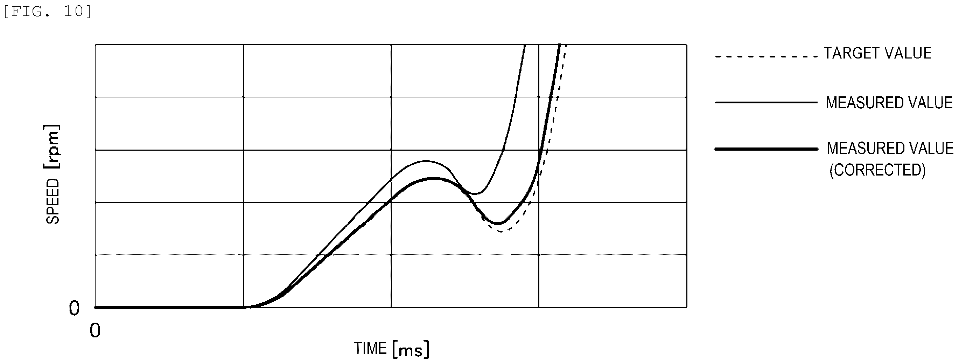

Fig. 9 collectively illustrates a flow of the engine start control by the engine start controller 1 so as to facilitate visual understanding of the flow. Here, the following flow is illustrated. When the clutch transmission torque (Fig. 3) at the time of executing the engine start control is set, the target value (the predicted value) of the engine speed, which is based on the stop crank position of the engine 20, is set (Fig. 4 and Fig. 5), the actual engine speed (the measured value) is measured (Fig. 6), the difference between the target value and the measured value is calculated (Fig. 7), the feedback correction amount of the clutch transmission torque is calculated (Fig. 8), and the clutch transmission torque is subjected to the feedback correction. Fig. 10 illustrates a relationship among these target value and measured value and the measured value after the feedback correction (described as "MEASURED VALUE (CORRECTED)" in Fig. 10).

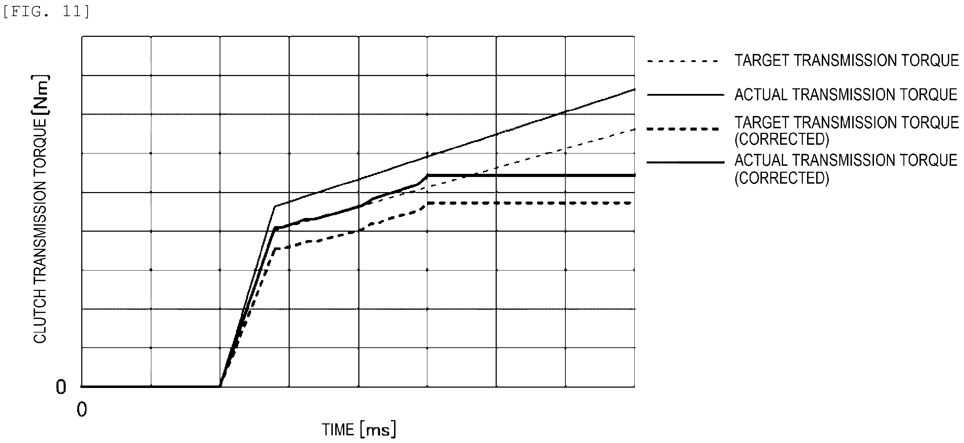

Fig. 11 illustrates an example of target transmission torque and actual transmission torque in the case where the feedback correction is not performed (the correction is not made) (simply described as "TARGET TRANSMISSION TORQUE" and "ACTUAL TRANSMISSION TORQUE" in Fig. 11) and an example of the target transmission torque and the actual transmission torque in the case where the feedback correction is performed (the correction is made) (described as "TARGET TRANSMISSION TORQUE (CORRECTED)" and "ACTUAL TRANSMISSION TORQUE (CORRECTED)" in Fig. 11). A thin broken line represents the transmission torque (the target transmission torque) that is estimated from the target value in the case where the correction is not made. A thin solid line represents the transmission torque (the actual transmission torque) that is estimated from the measured value and is actually transmitted for the engine start in the case where the correction is not made. As illustrated in Fig. 11, due to a difference between these types of the torque, the correction is made to bring the actual transmission torque in proximity to or to match the target transmission torque.

More specifically, in the example illustrated in Fig. 11, the actual transmission torque is higher than the target transmission torque in the case where the correction is not made. Accordingly, a command value of the transmission torque (command transmission torque) is reduced by a value that is determined from the difference between the actual transmission torque and the target transmission torque (see Fig. 8). This command transmission torque corresponds to the target transmission torque in the case where the correction is made (a bold broken line in Fig. 11). When the target transmission torque is corrected, just as described, the actual transmission torque after the correction (a bold solid line in Fig. 11) can substantially be equal to the initial target transmission torque without the correction (the thin broken line in Fig. 11). In this way, the feedback correction is performed on the basis of the difference between the measured value and the target value.

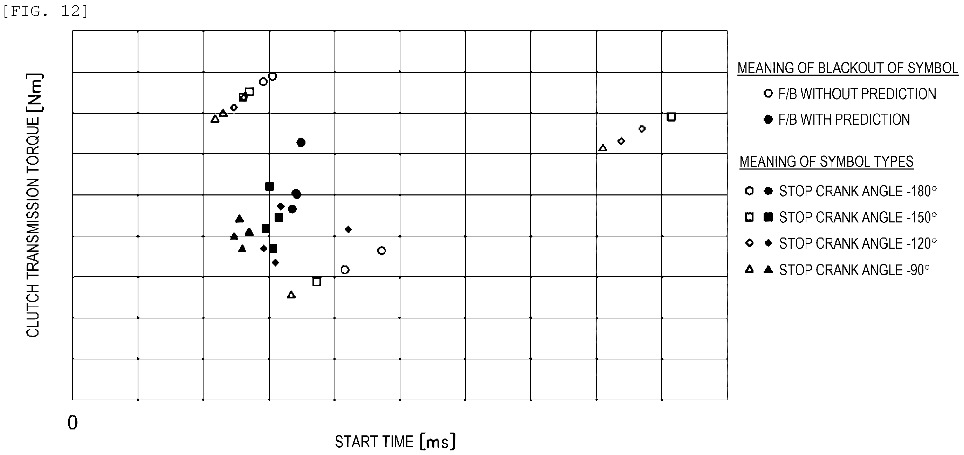

In the case where the feedback correction is performed without using the target value, for which the above-described stop crank position is considered, the clutch transmission torque and the start time fluctuate significantly. Fig. 12 illustrates an example of such a case. In a graph illustrated in Fig. 12, a vertical axis represents a peak value of the transmission torque [Nm], and a horizontal axis represents the start time [ms]. Each symbol represents the stop crank position (-180 degrees, -150 degrees, -120 degrees, or -90 degrees). A difference between white and black of the same symbol indicates a difference in use of the target value. More specifically, a white symbol (o and the like) indicates a simulation result of a case where the feedback correction is performed without setting the target value, which is based on the stop crank position (the stop crank angle), and a black symbol (• and the like) indicates a simulation result of a case where the feedback correction is performed by setting the target value, which is based on the stop crank position. As it is understood from Fig. 12, in the case where the feedback correction is performed without setting the target value, both of the clutch transmission torque and the start time fluctuate significantly. On the other hand, in the case where the feedback correction is performed by setting the target value, the fluctuation in the clutch transmission torque and the start time is reduced.

The above-described control relates to control for reducing the start time of the engine 20 as short as possible. That is, when the engine 20 is started by increasing the requested drive power (an acceleration request) by the driver of the vehicle 10, the start time of the engine 20 is reduced as short as possible such that the vehicle 10 can be accelerated responsively. Meanwhile, in the case where the engine 20 is started by a cause other than the above, there is no problem even when the start time of the engine 20 becomes longer than the start time of the engine 20 by increasing the requested drive power.

Accordingly, the target engine speed value setting section 62 may be configured to set the target engine speed value such that the engine start time, which is based on the target engine speed value, is short when the engine 20 is started by increasing the requested drive power by the driver of the vehicle 10 (determined on the basis of the signal from the accelerator operation amount sensor 74) and that the engine start time is long when the engine 10 is started by the cause other than the above. That is, the target engine speed value setting section 62 sets the target engine speed value to be lower when the engine 20 is started by the other cause than when the engine 20 is started by increasing the requested drive power. As a result, the start time is extended. However, the engine 20 can be started with lower energy. In this way, the vehicle can travel for a long distance in the EV travel mode, which improves the fuel economy, for example. It is also possible to alleviate a shock at the time of the start of the engine 20. An example of the other cause is that the SOC of the battery 46 for driving the motor 40 becomes equal to or lower than a specified value (determined on the basis of history of a voltage/a current value from the inverter 45).

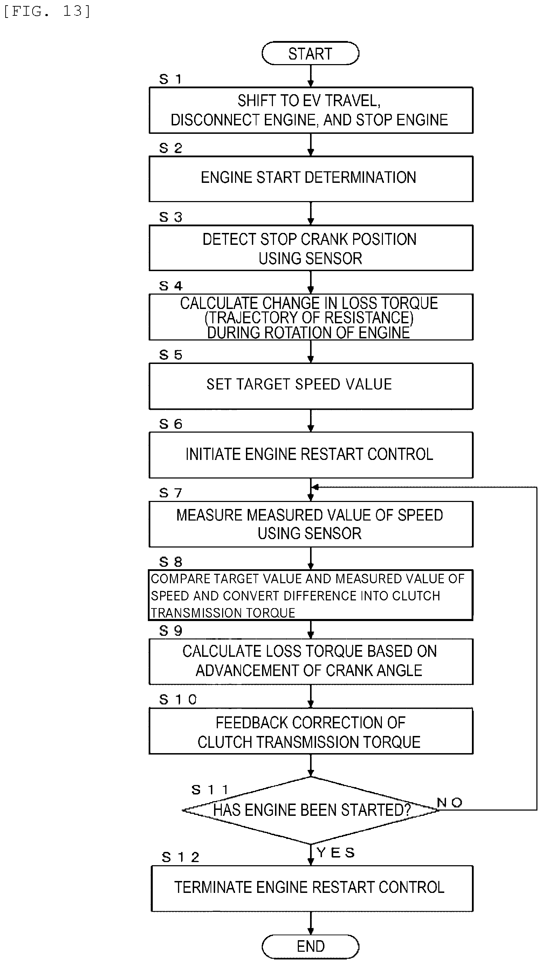

Fig. 13 is a flowchart of the engine start control by the electronic control unit 60. First, in step S1, in order to shift from the engine travel mode or the hybrid travel mode to the EV travel mode, the clutch 30 is disengaged to disconnect the engine 20, and the engine 20 is stopped. When the engine travel mode is shifted to the EV travel mode, the motor 40 is driven. When the hybrid travel mode is shifted to the EV travel mode, a driven state of the motor 40 is maintained.

In the case where an engine start condition is satisfied in the state where the engine 20 is stopped, an engine start determination to start the engine 20 is made. Here, it is assumed that the engine start determination is made in step S2. At this time, it is determined whether the engine is promptly started or the engine is started in a manner to minimize an energy consumption amount as much as possible according to a cause of the engine start determination (for example, an acceleration request by the driver, a reduction in the SOC of the battery 46, or the like). More specifically, at the time of the start by increasing the requested drive power (the accelerator operation amount), the engine start time is set to be short. At the time of the start other than the above (for example, at the time of the start due to the reduction in the SOC of the battery 46), the start time is set to be long.

In next step S3, the stop crank position of the engine 20 is detected by using the signal from the crank angle sensor 71.

In next step S4, the loss torque (more specifically, a temporal change in the loss torque as illustrated in Fig. 4) is calculated on the basis of the stop crank position detected in step S3. Next, in step S5, target rotation behavior of the engine 20 (that is, the target engine speed value) is calculated and set on the basis of the loss torque, which is calculated in step S4, the correction amount, which is calculated by the correction section 63, and the inertia of the engine 20. Then, in next step S6, restart control for the engine 20 by using the motor 40, which currently drives the vehicle 10, is initiated. In this restart control for the engine 20, the clutch transmission torque is subjected to the feedback correction.

More specifically, in step S7, the engine speed sensor 73 measures the actual engine speed (the measured value). Next, in step S8, the target value, which is set in step S5, and the measured value, which is measured in step S7, are compared, and the difference therebetween is converted into the clutch transmission torque (the feedback correction amount). In next step S9, the loss torque is calculated on the basis of the advancement of the crank angle and the temporal change in the loss torque, which is calculated in step S4. In next step S10, the clutch transmission torque is subjected to the feedback correction by adding the feedback correction amount, which is calculated in step S8, and the loss torque, which is calculated in step S9. Then, the clutch 30 is controlled such that this clutch transmission torque, which has been subjected to the feedback correction, is generated.

In next step S11, it is determined whether the engine 20 has been started. The processing operation from step S7 to S11 is repeated until it is determined in this step S11 that the engine 20 has been started. If it is determined that the engine 20 has been started in step S11, the restart control for the engine 20 is terminated in step S12.

According to the invention, the engine start controller 1 includes: the clutch transmission torque control section 61 that controls the transmission torque of the clutch 30 on the basis of the target engine speed value at the time of starting the engine 20 by the motor 40; and the target engine speed value setting section 62 that sets the target engine speed value on the basis of the stop crank position of the engine 20. Thus, it is possible to optimize the transmission torque of the clutch 30 that is required to start the engine 20. As a result, during driving of the vehicle 10 by using the motor 40, the engine start torque of the motor 40, which has to be saved as redundant power, can be reduced as low as possible, which in turn expands the EV travel range where the vehicle 10 can travel in the EV travel mode. Therefore, the fuel economy can be improved.

### Industrial Applicability

The present invention is useful for the hybrid vehicle that includes, as the drive sources of the hybrid vehicle, the engine and the motor that are mutually coupled via the clutch, and is also useful for the engine start controller of the hybrid vehicle.

### Reference Signs List

- 1:: engine start controller
- 10:: hybrid vehicle
- 20:: engine
- 30:: clutch
- 40:: motor
- 61:: clutch transmission torque control section
- 62:: target engine speed value setting section
- 63:: correction section
- 64:: feedback correction section

## Claims

1. An engine start controller (1) for a hybrid vehicle (10), the hybrid vehicle (10) having,
as drive sources of said hybrid vehicle (10), an engine (20) and a motor (40) that are mutually coupled via a clutch (30), and
a crank angle sensor (71) that detects and outputs a crank angle of the crank shaft (21) in the engine (20),
**characterized in that** the engine start controller (1) for the hybrid vehicle (10) comprises
a target engine speed value setting section (62) that sets, at the time of starting the engine (20) using the motor (40) via the clutch (30), a target engine speed value based on a stop crank position of the engine (20) detected by using a signal from the crank angle sensor (71);
a clutch transmission torque control section (61) that controls the clutch (30) via a hydraulic pressure control circuit (52) to control transmission torque of the clutch (30) on the basis of the target engine speed value; and
a feedback correction section (64) that
calculates, after initiation of start control for the engine (20), a feedback correction amount on the basis of a difference between the target engine speed value and a measured value of an engine speed and calculates a loss torque on the basis of advancement of the crank angle, and
adds the feedback correction amount and the loss torque together
to subject the transmission torque of the clutch (30) controlled by the clutch transmission torque control section (61) to feedback correction.

2. The engine start controller (1) for the hybrid vehicle (10) according to claim 1 further comprising:
a correction section (63) that corrects the target engine speed value set by the target engine speed value setting section (62) on the basis of mechanical resistance of the engine (20).

3. The engine start controller (1) for the hybrid vehicle (10) according to claim 1 or 2,
wherein the target engine speed value setting section (62) is configured to set the target engine speed value such that an engine start time, which is based on the target engine speed value, becomes short at the time of starting the engine (20) by increasing requested drive power by a driver of the hybrid vehicle (10) and becomes long at the time of starting the engine (20) by another cause.

4. A hybrid vehicle (10) comprising:
an engine (20) and a motor (40) that serve as drive sources of said hybrid vehicle (10) and are mutually coupled via a clutch (30);
a crank angle sensor (71) that detects and outputs a crank angle of a crank shaft (21) in the engine (20);
a hydraulic pressure control circuit (52) that controls the clutch (30); and
an engine start controller (1) according to claim 1 that controls a start of the engine (20).

## Patentansprüche

1. Motorstartsteuerung bzw. -regler (1) für ein Hybridfahrzeug (10), wobei das Hybridfahrzeug (10) aufweist:
als Antriebsquellen des Hybridfahrzeugs (10), einen Motor bzw. Verbrennungsmotor (20) und einen Motor bzw. Elektromotor (40), die über eine Kupplung (30) miteinander gekoppelt sind, und
einen Kurbelwinkelsensor (71), der einen Kurbelwinkel der Kurbelwelle (21) in dem Motor (20) erfasst und ausgibt,
**dadurch gekennzeichnet, dass**
die/der Motorstartsteuerung bzw. -regler (1) für das Hybridfahrzeug (10) umfasst:
einen Soll-Motordrehzahlwert-Einstellabschnitt (62), der zum Zeitpunkt des Startens des Motors (20) unter Verwendung des Motors (40) über die Kupplung (30) einen Soll-Motordrehzahlwert basierend auf einer Stopp-Kurbelposition des Motors (20) einstellt, die unter Verwendung eines Signals von dem Kurbelwinkelsensor (71) erfasst wird,
einen Kupplungsübertragungsmoment-Steuer- bzw. -Regelabschnitt (61), der die Kupplung (30) über eine Hydraulikdrucksteuer- bzw. -regelschaltung (52) steuert bzw. regelt, um das Übertragungsmoment der Kupplung (30) auf der Basis des Motordrehzahlsollwerts zu steuern bzw. zu regeln; und
einen Feedback-Korrekturabschnitt (64), der
nach dem Einleiten der Startsteuerung bzw. -regelung für den Motor (20) einen Feedback-Korrekturbetrag auf der Basis einer Differenz zwischen dem Soll-Motordrehzahlwert und einem gemessenen Wert einer Motordrehzahl berechnet und ein Verlustdrehmoment auf der Basis des Weiterentwickelns des Kurbelwinkels berechnet, und
den Feedback-Korrekturbetrag und das Verlustdrehmoment zusammen addiert, um das Übertragungsmoment der Kupplung (30), das durch den Kupplungsübertragungsmoment-Steuer- bzw. -Regelabschnitt (61) gesteuert bzw. geregelt wird, einer Feedback-Korrektur zu unterziehen.

2. Motorstartsteuerung bzw. -regler (1) für das Hybridfahrzeug (10) nach Anspruch 1, ferner umfassend:
einen Korrekturabschnitt (63), der den durch den Soll-Motordrehzahlwert-Einstellabschnitt (62) eingestellten Soll-Motordrehzahlwert auf der Basis des mechanischen Widerstands des Motors (20) korrigiert.

3. Motorstartsteuerung bzw. -regler (1) für das Hybridfahrzeug (10) nach Anspruch 1 oder 2,
wobei der Soll-Motordrehzahlwert-Einstellabschnitt (62) konfiguriert ist, den Soll-Motordrehzahlwert so einzustellen, dass eine Motorstartzeit, die auf dem Soll-Motordrehzahlwert basiert, zum Zeitpunkt des Startens des Motors (20) kurz wird, und zwar durch Erhöhen der angeforderten Antriebsleistung durch einen Fahrer des Hybridfahrzeugs (10), und zum Zeitpunkt des Startens des Motors (20) aus einem anderen Grund lang wird.

4. Hybridfahrzeug (10), umfassend:
einen Motor bzw. Verbrennungsmotor (20) und einen Motor bzw. Elektromotor (40), die als Antriebsquellen des Hybridfahrzeugs (10) dienen und über eine Kupplung (30) miteinander gekoppelt sind;
einen Kurbelwinkelsensor (71), der einen Kurbelwinkel einer Kurbelwelle (21) in dem Motor (20) erfasst und ausgibt;
einen Hydraulikdrucksteuer- bzw. -regelkreis (52), der die Kupplung (30) steuert bzw. regelt; und
eine(n) Motorstartsteuerung bzw. -regler (1) nach Anspruch 1, die/der einen Start des Motors (20) steuert bzw. regelt.

## Revendications

1. Contrôleur de démarrage de moteur (1) pour un véhicule hybride (10), le véhicule hybride (10) ayant,
comme sources d'entraînement dudit véhicule hybride (10), un moteur (20) et un dispositif moteur (40) qui sont couplés mutuellement par le biais d'un embrayage (30), et
un capteur d'angle de vilebrequin (71) qui détecte et émet un angle du vilebrequin (21) dans le moteur (20),
**caractérisé en ce que** le contrôleur de démarrage de moteur (1) pour le véhicule hybride (10) comprend
une section de réglage de valeur de vitesse de moteur cible (62) qui règle, au moment du démarrage du moteur (20) en utilisant le dispositif moteur (40) par le biais de l'embrayage (30), une valeur de vitesse de moteur cible en fonction d'une position de vilebrequin d'arrêt du moteur (20) détectée en utilisant un signal provenant du capteur d'angle de vilebrequin (71) ;
une section de commande de couple de transmission d'embrayage (61) qui commande l'embrayage (30) par le biais d'un circuit de commande de pression hydraulique (52) pour commander le couple de transmission de l'embrayage (30) en fonction de la valeur de vitesse de moteur cible ; et
une section de correction de rétroaction (64) qui
calcule, après initiation de la commande de démarrage pour le moteur (20), une quantité de correction de rétroaction en fonction d'une différence entre la valeur de vitesse de moteur cible et une valeur mesurée d'une vitesse de moteur, et calcule un couple de perte en fonction de l'avancée de l'angle de vilebrequin, et ajoute la quantité de correction de rétroaction et le couple de perte ensemble pour soumettre le couple de transmission de l'embrayage (30) commandé par la section de commande de couple de transmission d'embrayage (61) à une correction de rétroaction.

2. Contrôleur de démarrage de moteur (1) pour le véhicule hybride (10) selon la revendication 1, comprenant en outre :
une section de correction (63) qui corrige la valeur de vitesse de moteur cible réglée par la section de réglage de valeur de vitesse de moteur cible (62) en fonction de la résistance mécanique du moteur (20).

3. Contrôleur de démarrage de moteur (1) pour le véhicule hybride (10) selon la revendication 1 ou 2,
dans lequel la section de réglage de valeur de vitesse de moteur cible (62) est configurée pour régler la valeur de vitesse de moteur cible de sorte qu'une durée de démarrage de moteur, qui est basée sur la valeur de vitesse de moteur cible, devient courte au moment du démarrage du moteur (20) en augmentant la puissance d'entraînement requise par un conducteur du véhicule hybride (10) et devient longue au moment du démarrage du moteur (20) par une autre cause.

4. Véhicule hybride (10) comprenant :
un moteur (20) et un dispositif moteur (40) qui servent de sources d'entraînement dudit véhicule hybride (10) et sont couplés mutuellement par le biais d'un embrayage (30) ;
un capteur d'angle de vilebrequin (71) qui détecte et émet un angle d'un vilebrequin (21) dans le moteur (20) ;
un circuit de commande de pression hydraulique (52) qui commande l'embrayage (30) ; et
un contrôleur de démarrage de moteur (1) selon la revendication 1 qui commande un démarrage du moteur (20).
